# EUROPÄISCHE PATENTANMELDUNG

(11) **EP 4 762 899 A1**
(43) Veröffentlichungstag der Anmeldung: **24.06.2026**
(21) Anmeldenummer: 25222484.5
(22) Anmeldetag: 11.12.2025
(51) Int. Cl.: A01C 7/20, A01C 15/04

(54) **PNEUMATISCHER DÜNGERSTREUER UND VERFAHREN ZUM BETREIBEN EINES PNEUMATISCHEN DÜNGERSTREUERS**

(30) Priorität: 18.12.2024 DE 102024138602
(71) Anmelder: HORSCH LEEB Application Systems SE & Co. KG, 94405 Landau a.d. Isar (DE)
(72) Erfinder: Saller, Fabian, 94405 Landau an der Isar (DE)
(74) Vertreter: v. Bezold & Partner Patentanwälte - PartG mbB

(57) **Zusammenfassung**

Die Erfindung betrifft einen pneumatischen Düngerstreuer (1) zum Ausbringen von körnigem Verteilgut auf eine landwirtschaftliche Fläche (LF), welcher zumindest ein Verteilgestänge (5) mit mehreren Gestängeabschnitten (12) und mehreren, unterschiedliche Längen aufweisende, Verteilleitungen (6) umfasst, wobei die Verteilleitungen (6) zur Förderung des Verteilguts mit einem, mittels einer Strömungserzeugungseinrichtung (9) erzeugtem, Luftvolumenstrom beaufschlagbar sind.

Die Erfindung zeichnet sich dadurch aus, dass zumindest zwei der Gestängeabschnitte (12) mittels zumindest eines Gelenks (23) drehbar um eine erste, senkrecht zu einer Längserstreckung (31) der Gestängeabschnitte (12) orientierte, Drehachse (24) miteinander verbunden sind.

## Beschreibung

Die Erfindung betrifft einen pneumatischen Düngerstreuer. Darüber hinaus betrifft die Erfindung ein Verfahren zum Betreiben eines pneumatischen Düngerstreuers.

Aus dem Stand der Technik sind pneumatische Düngerstreuer mit großen Arbeitsbreiten von mindestens 24 Meter bekannt. Dadurch kann es vorkommen, dass bei Krafteinwirkungen auf den Düngerstreuer sich das Verteilgestänge mit einer großen Amplitude an den Enden des Verteilgestänges bewegt, wodurch durch Bodenkontakt oder dergleichen das Gestänge beschädigt werden kann, und andererseits keine gleichmäßige Verteilung von Düngemittel möglich ist.

Aufgabe der Erfindung ist es somit, die beschriebenen Nachteile des Standes der Technik zu beseitigen. Insbesondere soll ein pneumatischer Düngerstreuer bereitgestellt werden, welcher eine Anpassung des Verteilgestänges abhängig von einwirkenden Kräften ermöglicht.

Diese Aufgaben werden gelöst durch einen pneumatischen Düngerstreuer mit den Merkmalen des unabhängigen Anspruch 1 sowie durch ein Verfahren zum Betreiben eines pneumatischen mit den Merkmalen des Verfahrensanspruch 15. Vorteilhafte Ausführungsformen und Weiterbildungen der Erfindung sind in den Ansprüchen und der folgenden Beschreibung unter teilweiser Bezugnahme auf die Figuren offenbart.

Die Erfindung betrifft einen pneumatischer Düngerstreuer zum Ausbringen von körnigem Verteilgut auf eine landwirtschaftliche Fläche, welcher zumindest ein Verteilgestänge mit mehreren Gestängeabschnitten und mehreren, unterschiedliche Längen aufweisende, Verteilleitungen umfasst, wobei die Verteilleitungen zur Förderung des Verteilguts mit einem, mittels einer Strömungserzeugungseinrichtung erzeugtem, Luftvolumenstrom beaufschlagbar sind.

Die Erfindung zeichnet sich dadurch aus, dass zumindest zwei der Gestängeabschnitte mittels zumindest eines Gelenks drehbar um eine erste, senkrecht zu einer Längserstreckung der Gestängeabschnitte orientierte, Drehachse miteinander verbunden sind.

Die Längserstreckung ist diejenige Achse, in welcher sich der jeweilige Gestängeabschnitt mit seiner größten Abmessung erstreckt. Das heißt, dass die weiteren Abmessungen, also die Höhenerstreckung sowie die Breitenerstreckung, des jeweiligen Gestängeabschnitts kleiner als die Längserstreckung sind.

Bei einem ausgeklappten Verteilgestänge, vorzugsweise während eines Betriebs des pneumatischen Düngerstreuers, erstreckt sich bevorzugt die Längserstreckung des Gestängeabschnitts quer zu einer Fahrtrichtung des pneumatischen Düngerstreuers, oder entlang einer Längserstreckung des Düngerstreuers, welcher vorzugsweiser der Fahrtrichtung entspricht. Die erste Drehachse kann eine in Fahrtrichtung orientierte Drehachse sein, vorzugsweise im Betrieb des Düngerstreuers und/oder bei ausgeklappten Verteilgestänge.

Bei einem eingeklappten Verteilgestänge, vorzugsweise während eines Transports, vorzugsweise einer Straßenfahrt, oder Lagerung des pneumatischen Düngerstreuers, erstreckt sich die Längserstreckung der Gestängeabschnitte nicht mehr quer zu der Fahrtrichtung, sondern zweckmäßig entlang der Längserstreckung und/oder einer Höhenerstreckung des pneumatischen Düngerstreuers, wodurch die Breite des Düngerstreuers verringerbar ist.

Das zumindest eine Gelenk ist eingerichtet, eine Drehung der zumindest zwei Gestängeabschnitte um die erste Drehachse zu ermöglichen. Bevorzugt ist das zumindest eine Gelenk eingerichtet, zumindest einen Freiheitsgrad für die Bewegung der zumindest zwei Gestängeabschnitte zueinander bereitzustellen. Bevorzugt ist das zumindest eine Gelenk durch zumindest ein Drehgelenk ausgebildet.

Gemäß einer bevorzugten Ausführungsform kann es vorgesehen sein, dass die zumindest zwei Gestängeabschnitte mittels des zumindest einen Gelenks drehbar um eine zweite, aufrecht orientierte, Drehachse zueinander sind.

Bevorzugt kann es vorgesehen sein, dass das zumindest eine Gelenk eingerichtet ist, die Drehung der zumindest zwei Gestängeabschnitte um die erste Drehachse und die zweite Drehachse zu ermöglichen. Das heißt, dass das Gelenk zumindest zwei Freiheitsgrade aufweist. Alternativ kann es vorgesehen sein, dass das zumindest eine Gelenk durch zwei Gelenke ausgebildet ist, wobei jedes der Gelenke zumindest einen Freiheitsgrad aufweist. Bevorzugt können ein erstes Gelenk, welches eingerichtet ist, die Drehung der zumindest zwei Gestängeabschnitte um die erste Drehachse zu ermöglichen, und ein zweites Gelenk, welches eingerichtet ist, die Drehung der zumindest zwei Gestängeabschnitte um die zweite Drehachse zu ermöglichen, vorgesehen sein.

Die Strömungserzeugungseinrichtung ist bevorzugt durch ein, mit einer variablen Drehzahl betreibbares Gebläse gebildet, oder durch zumindest zwei oder mehr, jeweils mit variabler Drehzahl betreibbaren Gebläse gebildet. Das Gebläse kann bevorzugt ein Zentrifugalgebläse und/oder dergleichen sein.

Gemäß einer bevorzugten Ausführungsform kann es vorgesehen sein, dass eine Steuer- und/oder Regeleinheit eingerichtet ist, eine Drehzahl der Strömungserzeugungseinrichtung durch einen die Strömungserzeugungseinrichtung antreibenden Antriebs zu steuern und/oder zu regeln. Bevorzugt ist der Antrieb ein elektrischer, hydraulischer und/oder pneumatischer arbeitender Antrieb. Bevorzugt kann der Antrieb durch zumindest einen Motor gebildet sein. Der Motor kann beispielsweise ein Hydraulikmotor und/oder ein Elektromotor sein.

Durch ein Steuern und/oder Regeln der Drehzahl der Strömungserzeugungseinrichtung kann die Strömungsgeschwindigkeit des erzeugten Luftvolumenstroms verändert werden, wodurch auch ein Luftdruck in den Verteilleitungen und/oder einer Luftstromteilereinrichtung automatisiert veränderbar ist.

In Abhängigkeit der Drehzahl der Strömungserzeugungseinrichtung kann der Luftvolumenstrom variiert werden.

Bevorzugt kann eine Luftstromteilereinrichtung vorgesehen sein, welche mit der Strömungserzeugungseinrichtung und den Verteilleitungen gekoppelt ist. Bevorzugt ist die Luftstromteilereinrichtung eingerichtet, den von der Strömungserzeugungseinrichtung erzeugten Luftvolumenstrom auf die Verteilleitungen aufzuteilen. Insbesondere kann die Strömungserzeugungseinrichtung mit der Luftstromteilereinrichtung gekoppelt sein, bevorzugt ausschließlich mit der Luftstromteilereinrichtung gekoppelt sein, um zumindest in allen Verteilleitungen ein im Wesentlichen gleiches Druckniveau bereitzustellen.

Die Strömungserzeugungseinrichtung und/oder die Luftstromteilereinrichtung ist/sind bevorzugt dem Verteilgestänge, insbesondere einem Gestängemittelteil des Verteilgestänges, zugeordnet, insbesondere räumlich zugeordnet. Eine räumliche Zuordnung kann bspw. durch eine bauliche Einheit erreicht werden.

Bevorzugt sind zur jeweiligen Verbindung zwischen der Luftstromteilereinrichtung und den Verteilleitungen eine Mehrzahl von gleichen und/oder unterschiedlichen Querschnitte aufweisenden Anschlussleitungen angeordnet. Die Anschlussleitungen können beispielsweise durch Anschlussstutzen gebildet sein. Alternativ oder kumulativ können die Anschlussleitungen durch Leitungsabschnitte gebildet sein. Anhand der einen gleichen und/oder unterschiedlichen Querschnitt aufweisenden Anschlussleitungen sowie der einen gleichen und/oder unterschiedlichen Querschnitt aufweisenden Verbindungsanschlüssen, kann die Geschwindigkeit der Zuführluftströmung zusätzlich variierbar sein.

Gemäß einer bevorzugten Ausführungsform kann es vorgesehen sein, dass eine Steuer- und/oder Regeleinheit, welche eingerichtet ist, eine mit den zumindest zwei Gestängeabschnitten gekoppelte Stelleinrichtung zu steuern und/oder zu regeln. Vorzugsweise ist die zumindest eine Stelleinrichtung mechanisch mit den zumindest zwei Gestängeabschnitten gekoppelt.

Bevorzugt ist die zumindest eine Stelleinrichtung eingerichtet, die zumindest zwei Gestängeabschnitte mittels des zumindest einen Gelenks um die erste, senkrecht zu einer Längserstreckung der Gestängeabschnitte orientierte, Drehachse zu drehen.

Durch ein Steuern und/oder Regeln der zumindest einen Stelleinrichtung verändert sich die zumindest eine Stelleinrichtung, beispielsweise eine Länge, eine Lage, und/oder dergleichen, wodurch die zumindest zwei Gestängeabschnitte mittels des zumindest einen Gelenks zueinander um die erste Drehachse gedreht werden.

Bevorzugt ist die zumindest eine Stelleinrichtung eingerichtet, die zumindest zwei Gestängeabschnitte mittels des zumindest einen Gelenks um die zweite, aufrecht orientiert, Drehachse zu drehen.

Durch ein Steuern und/oder Regeln der zumindest einen Stelleinrichtung verändert sich die zumindest eine Stelleinrichtung, beispielsweise eine Länge, eine Lage, und/oder dergleichen, wodurch die zumindest zwei Gestängeabschnitte mittels des zumindest einen Gelenks zueinander um die zweite Drehachse gedreht werden.

Durch das Steuern und/oder Regeln zumindest einer Stelleinrichtung, welche eingerichtet ist, die zumindest zwei Gestängeabschnitte zueinander zu drehen, kann eine präzise und benutzerfreundliche Drehung der zumindest zwei Gestängeabschnitte erreicht werden.

Gemäß einer weiteren bevorzugten Ausführungsform kann es vorgesehen sein, dass die Steuer- und/oder Regeleinheit eingerichtet ist, die zumindest eine Stelleinrichtung anhand von, mittels den zumindest zwei Gestängeabschnitten zugeordneten Sensoreinheiten, erfassten Abständen der zumindest zwei Gestängeabschnitte zu der landwirtschaftlichen Fläche zu steuern und/oder zu regeln.

Bevorzugt ist den zumindest zwei Gestängeabschnitten jeweils zumindest eine Sensoreinheit zugeordnet, wobei die jeweilige Sensoreinheit eingerichtet ist, einen Abstand des jeweiligen Gestängeabschnitts zu der landwirtschaftlichen Fläche zu erfassen. Vorzugsweise kann die jeweilige Sensoreinheit zumindest einen Sensor zum Erfassen des Abstands aufweisen. Bevorzugt kann die Sensoreinheit zumindest einen Radarsensor, einen Ultraschallsensor, einen Lasersensor, und/oder jeglichen anderen Sensor, welcher zum Erfassen des Abstands eingerichtet ist, umfassen.

Bevorzugt ist die Steuer- und/oder Regeleinheit eingerichtet, die zumindest eine Stelleinrichtung anhand der erfassten Abstände des jeweiligen der zumindest zwei Gestängeabschnitte zu der landwirtschaftlichen Fläche zu regeln und/oder zu steuern.

Hierdurch kann eine gewisse Sicherheitsanforderung erfüllt werden. Bevorzugt ist die Steuer- und/oder Regeleinheit eingerichtet, die Stelleinrichtung anhand der erfassten Abstände derart zu steuern und/oder zu regeln, dass der jeweilige Abstand in einem vorgegebenen Abstandsbereich liegt. Das heißt, dass die Steuer- und/oder Regeleinheit eingerichtet ist, die Stelleinrichtung derart zu steuern und/oder zu regeln, dass ein minimaler Abstand und/oder ein maximaler Abstand nicht überschreitbar ist. Bevorzugt ist der vorgegebene Abstandsbereich durch eine manuelle Benutzereingabe vorgebbar. Alternativ oder kumulativ ist die Steuer- und/oder Regeleinheit eingerichtet, den vorgegebenen Abstandsbereich anhand eines Pflanzenbestands, vorzugsweise eine Wuchshöhe, der landwirtschaftlichen Fläche und/oder geometrischen Abmessungen, vorzugsweise eine Arbeitsbreite, des Düngerstreuers zu definieren.

Gemäß einer bevorzugten Ausführungsform kann es vorgesehen sein, dass dass die Steuer- und/oder Regeleinheit eingerichtet ist, die zumindest eine Stelleinrichtung anhand der erfassten Abstände derart zu steuern und/oder zu regeln, dass zumindest einer der zumindest zwei Gestängeabschnitte einen vorgebbaren Abstand zu der landwirtschaftlichen Fläche aufweist. Bevorzugt ist der vorgegebene Abstand durch eine manuelle Benutzereingabe vorgebbar. Alternativ oder kumulativ ist die Steuer- und/oder Regeleinheit eingerichtet, den vorgegebenen Anstand anhand des Pflanzenbestands, vorzugsweise der Wuchshöhe, der landwirtschaftlichen Fläche und/oder geometrischen Abmessungen, vorzugsweise der Arbeitsbreite, der Anordnung von Verteilelementen an dem Verteilgestänge, und/oder dergleichen, des Düngerstreuers zu definieren. Die Verteilelemente sind zum Verteilen des Verteilguts eingerichtet. Bevorzugt sind die Verteilelemente an den Verteilleitungen, vorzugsweise Auslassöffnungen der Verteilleitungen, angeordnet.

Gemäß einer weiteren bevorzugten Ausführungsform kann es vorgesehen sein, dass zumindest eine der jeweiligen Sensoreinheiten eingerichtet ist, den Abstand des jeweiligen Gestängeabschnitts zu der landwirtschaftlichen Fläche vorauseilend zu erfassen.

Bevorzugt ist zur vorauseilenden Erfassung des Abstands zu der landwirtschaftlichen Fläche die zumindest eine Sensoreinheit von dem Verteilgestänge aus nach vorne gerichtet angeordnet ist, bevorzugt ein Erfassungsbereich der zumindest einen Sensoreinheit nach vorne gerichtet angeordnet ist. Das heißt, dass der Erfassungsbereich der zumindest einen Sensoreinheit zumindest teilweise in Fahrtrichtung vor dem Verteilgestänge angeordnet ist.

Bevorzugt ist die Steuer- und/oder Regeleinheit eingerichtet, die zumindest eine Stelleinrichtung anhand der vorauseilend erfassten Abstände zu steuern und/oder zu regeln. Bevorzug ist die Steuer- und/oder Regeleinheit eingerichtet, die zumindest eine Stelleinrichtung vorauseilend anhand der vorauseilend erfassten Abstände zu steuern und/oder zu regeln. Das heißt, dass die zumindest eine Stelleinrichtung entsprechend vorauseilend gesteuert und/oder geregelt wird, so dass beim Erreichen der Position, welcher dem vorauseilenden erfassten Abstand entspricht, die entsprechende Steuerung und/oder Regelung der zumindest einen Stelleinrichtung schon begonnen hat oder startet, ohne weitere Verzögerung durch Reaktionszeiten und/oder dergleichen.

Gemäß einer weiteren bevorzugten Ausführungsform kann es vorgesehen sein, dass zumindest eine der Sensoreinheiten eingerichtet ist, eine Bewegung, vorzugsweise eine Geschwindigkeit und/oder eine Beschleunigung, des jeweiligen Gestängeabschnitts zu oder weg von der landwirtschaftlichen Fläche zu erfassen, wobei die Steuer- und/oder Regeleinheit eingerichtet ist, zur Drehung der zumindest zwei Gestängeabschnitte um die erste Drehachse die zumindest eine Stelleinrichtung anhand der erfassten Bewegung zu steuern und/oder zu regeln.

Bevorzugt ist die Steuer- und/oder Regeleinheit eingerichtet, anhand der erfassten Bewegung zu oder weg von der landwirtschaftlichen Fläche zu bestimmen, wie die zumindest eine Stelleinrichtung gesteuert und/oder geregelt werden muss, beispielsweise, ob die zumindest eine Stelleinrichtung in ihrer Länge verkürzt oder verlängert werden muss. Bevorzugt ist die Steuer- und/oder Regeleinheit eingerichtet, anhand einer erfassten Geschwindigkeit und/oder erfassten Beschleunigung die zumindest eine Stelleinrichtung in ihrer benötigten bereitzustellenden Kraft zu steuern und/oder zu regeln. Hierdurch kann eine Kollision mit der landwirtschaftlichen Fläche vermieden werden. Bevorzugt kann die Steuer- und/oder Regeleinheit eingerichtet sein, die zumindest eine Stelleinrichtung progressiv zu steuern und/oder zu regeln.

Gemäß einer weiteren bevorzugten Ausführungsform kann es vorgesehen sein, dass sich die Verteilleitungen entlang der zumindest zwei Gestängeabschnitte erstrecken. Bevorzugt sind die Verteilleitungen mit den zumindest zwei Gestängeabschnitten fest verbunden.

Bevorzugt kann es vorgesehen sein, dass sich zumindest ein Teil der Verteilleitungen über die zumindest zwei Gestängeabschnitte erstreckt. Bevorzugt kann es vorgesehen sein, dass die sich über die zumindest zwei Gestängeabschnitte erstreckenden Verteilleitungen aus zumindest zwei mittels zumindest einer lösbaren Verbindung, vorzugsweise eine Steckverbindung, miteinander lösbar verbindbaren Verteilleitungsabschnitten gebildet ist. Vorzugsweise handelt es sich bei der Steckverbindung um eine Muffenverbindung.

Dies ist bevorzugt für ein Wechsel zwischen einem Betrieb des pneumatischen Düngerstreuers zu einem Transport des pneumatischen Düngerstreuers.

Weiter bevorzugt können die jeweiligen Verteilleitungsabschnitte zumindest abschnittsweise starr ausgebildet sein, wodurch für die jeweiligen Verteilleitungsabschnitt eine Beeinflussung des Luftvolumenstroms durch kurvige Abschnitte reduziert werden kann. Bevorzugt können die starren Verteilleitungsabschnitte den Verschleiß reduzieren, da diese aus harten bzw. widerstandsfähigen Material und/oder gerade verlaufend ausgebildet sein können. Auch eine Positionierung der jeweiligen Verteilleitungsabschnitte gegenüber dem Verteilgestänge und/oder dem Pflanzenbestand und/oder der landwirtschaftlichen Fläche kann durch die zumindest abschnittsweise starre Ausgestaltung der jeweiligen Verteilleitungen verbessert sein.

Dadurch, dass die jeweiligen Verteilleitungsabschnitte starr ausgebildet sind, ist eine entsprechend lösbare Verbindung notwendig. Um eine wiederholgenaue Verbindung zwischen den jeweiligen Verteilleitungsabschnitte zu ermöglichen, ist es vorgesehen, dass die Verteilleitungsabschnitte durch eine lösbare Verbindung, bevorzugt eine Steckverbindung, miteinander lösbar verbindbar sind.

Gemäß einer weiteren bevorzugten Ausführungsform kann es vorgesehen sein, dass die Steuer- und/oder Regeleinheit eingerichtet ist, die zumindest eine Stelleinrichtung anhand zumindest einer Drehbegrenzung zum Begrenzen der Drehung der zumindest zwei Gestängeabschnitte um die erste Drehachse zu steuern und/oder zu regeln.

Bevorzugt ist die zumindest eine Drehbegrenzung eingerichtet, die Drehung der zumindest zwei Gestängeabschnitte um die erste Drehachse zu begrenzen.

Dies ist insbesondere vorteilhaft, wenn die jeweiligen Verteilleitungsabschnitte mittels der lösbaren Verbindung miteinander verbunden sind. Es kann vorkommen, dass die Steuer- und/oder Regeleinheit die zumindest eine Stelleinrichtung derart steuert und/oder regelt, dass durch die Drehung der zumindest zwei Gestängeabschnitte die lösbare Verbindung lösbar ist. Wodurch die jeweiligen Verteilleitungsabschnitte fluidisch getrennt sind.

Um zu verhindern, dass die lösbaren Verbindungen der jeweiligen Verteilleitungen durch das Drehen der zumindest zwei Gestängeabschnitte zueinander gelöst werden, ist bevorzugt die zumindest eine Drehbegrenzung vorgesehen, welche eingerichtet ist, die Drehung der zumindest zwei Gestängeabschnitte zueinander um die erste Drehachse zu begrenzen.

Gemäß einer weiteren bevorzugten Ausführungsform kann es vorgesehen sein, dass die zumindest eine Drehbegrenzung eine mechanische Drehbegrenzung und/oder eine softwareseitige Drehbegrenzung sein.

Bevorzugt kann es vorgesehen sein, dass die Drehbegrenzung zum Begrenzen der Drehung der zumindest zwei Gestängeabschnitte um die erste Drehachse ist:
- eine Vorgabe eines maximalen Drehwinkels der zumindest zwei Gestängeabschnitte bei Drehung um die erste Drehachse zueinander; und/oder
- eine Vorgabe eines maximalen Verfahrwegs der zumindest einen Stelleinrichtung; und/oder
- eine mechanische Begrenzung.

Bevorzugt ist eine Winkelerfassungseinrichtung vorgesehen, welche eingerichtet ist, einen Drehwinkel zwischen den zumindest zwei Gestängeabschnitten zu erfassen. Bevorzugt ist die Winkelerfassungseinrichtung eingerichtet, den erfassten Drehwinkel an die Steuer- und/oder Regeleinheit zu übermitteln. Bevorzugt ist die Steuer- und/oder Regeleinheit eingerichtet, die zumindest eine Stelleinrichtung anhand des erfassten Drehwinkels und/oder des maximalen Drehwinkels zu steuern und/oder zu regeln, vorzugsweise derart, dass der maximale Drehwinkel nicht überschritten wird. Vorzugsweise kann die Winkelerfassungseinrichtung einen Winkelsensor umfassen, vorzugsweise ein Winkelpotentiometer und/oder weitere Sensoren, welche zur Erfassung eines Drehwinkels eingerichtet sind.

Alternativ oder kumulativ kann es vorgesehen sein, dass eine Verfahrwegerfassungseinheit vorgesehen ist, welche eingerichtet ist, den Verfahrweg der zumindest einen Stelleinrichtung zu erfassen. Bevorzugt ist die Steuer- und/oder Regeleinheit eingerichtet, die zumindest eine Stelleinrichtung anhand des erfassten Verfahrwegs und/oder des maximalen Verfahrwegs zu steuern und/oder zu regeln, vorzugsweise derart, dass der maximale Verfahrweg nicht überschritten wird.

Alternativ oder kumulativ kann es vorgesehen sein, dass die mechanische Begrenzung ausgebildet ist durch ein Wechselwirkungssystem, welches vorzugsweise ein oder mehrere Anschläge umfasst. Vorzugsweise kann die mechanische Begrenzung in ihrem Wirkungsweg veränderbar sein. Bevorzugt kann das Wechselwirkungssystem zumindest eine Nut-Feder-Führung umfassen, wobei die Nut-Feder-Führung durch die Ausdehnung der Nut begrenzt ist. Alternativ oder kumulativ sind weitere mechanische Begrenzungen denkbar.

Bevorzugt kann die Drehbegrenzung derart ausgebildet sein, dass bei Drehung der zumindest zwei Gestängeabschnitte um die erste Drehachse zueinander die jeweiligen Verteilleitungsabschnitte verbunden sind bzw. bleiben. Durch die Drehbegrenzung kann ein Lösen der Verbindung zwischen den jeweiligen Verteilleitungsabschnitten verhindert werden. Bevorzugt ist die zumindest eine Drehbegrenzung durch manuelle Benutzereingabe der Steuer- und/oder Regeleinheit vorgebbar. Bevorzugt ist die zumindest eine Drehbegrenzung abhängig von der lösbaren Verbindung der jeweiligen Verteilleitungsabschnitte. Beispielsweise kann durch das Muffenelement vorgegeben sein, wie weit sich die Verteilleitungsabschnitte voneinander weg bewegen können, bevor sich die Verbindung zwischen den Verteilleitungsabschnitte löst.

Gemäß einer weiteren bevorzugten Ausführungsform kann zumindest eine Lageerfassungseinrichtung vorgesehen sein, welche eingerichtet ist, eine Lage der zumindest zwei Gestängeabschnitte zueinander zu erfassen, wobei die Steuer- und/oder Regeleinheit eingerichtet ist, die zumindest eine Stelleinrichtung anhand der erfassten Lage der zumindest zwei Gestängeabschnitte zueinander zu steuern und/oder zu regeln.

Um die zumindest zwei Gestängeabschnitte, vorzugsweise hinsichtlich ihres Abstands zu der landwirtschaftlichen Fläche, steuern und/oder regeln zu können, ist es notwendig zu erfassen, wie die zumindest zwei Gestängeabschnitte überhaupt zueinander angeordnet sind, das heißt die Lage der zumindest zwei Gestängeabschnitte zu kennen. Abhängig von der erfassten Lage ist die Steuer- und/oder Regeleinheit eingerichtet, die zumindest eine Stelleinrichtung entsprechend anzusteuern. Bevorzugt ist die Steuer- und/oder Regeleinheit eingerichtet, anhand der erfassten Lage der zumindest zwei Gestängeabschnitte zueinander und des erfassten Abstands der zumindest zwei Gestängeabschnitte die zumindest eine Stelleinrichtung zu steuern und/oder zu regeln, vorzugsweise Steuer- und/Regelsignale an die zumindest eine Stelleinrichtung zu übermitteln.

Gemäß einer bevorzugten Ausführungsform kann es vorgesehen sein, dass das Verteilgestänge eine Trägereinrichtung umfasst. Bevorzugt kann es vorgesehen sein, dass die Trägereinrichtung mit einem Rahmengestell des pneumatischen Düngerstreuers gekoppelt ist und eingerichtet ist, höhenverstellbar gegenüber dem Rahmengestell zu sein.

Die Höhenverstellung kann mittels einer Höhenverstelleinheit, beispielsweise eines zwischen dem Rahmengestell und einer Trägereinrichtung angeordneten Parallelogramms und/oder einer Lineareinheit, umgesetzt sein. Dabei kann dem Parallelogramm und/oder der Lineareinheit zumindest ein Stellglied (z.B. ein oder mehrere hydraulisch und/oder pneumatisch betriebene Linearantriebe wie bspw. Zylinder oder dergl.) entsprechend zur Veränderung des Abstands zu der Referenzfläche, d.h. zum Verschwenken des Parallelogramms oder zur Verstellung der Lineareinheit zugeordnet sein.

Bevorzugt ist das Verteilgestänge mittels der Höhenverstelleinheit in seiner Höhe veränderbar.

Bevorzugt ist die Veränderungseinheit eingerichtet, durch Verändern des zumindest einen Stellglieds der Höhenverstelleinheit die Höhe des Verteilgestänges zu der Referenzfläche, beispielsweise der landwirtschaftlichen Fläche, zu verändern.

Die Höhenverstelleinheit, bevorzugt das Parallelogramm und/oder die Lineareinheit, können zweckmäßig Bestandteil des Verteilgestänges sein, bzw. kann insbesondere mit der Trägereinrichtung des Verteilgestänges mit dem Parallellogramm und/oder der Lineareinheit verbunden sein.

Gemäß einer weiteren bevorzugten Ausführungsform kann es vorgesehen sein, dass das Verteilgestänge ein Gestängemittelteil aufweist. Bevorzugt ist es vorgesehen, dass das Gestängemittelteil drehbar um eine in Fahrtrichtung orientierte Drehachse mit der Trägereinrichtung gekoppelt ist. Somit kann das Verteilgestänge aufgrund von Krafteinwirkungen auf das Verteilgestänge nachfolgen.

Bevorzugt ist die Veränderungseinheit eingerichtet, das Verteilgestänge mittels der drehbaren Kopplung des Verteilgestänges an der Trägereinrichtung eine Drehlage des Verteilgestänges zu verändern. Vorzugsweise umfasst die Veränderung der Drehlage des Verteilgestänges eine Steuerung und/oder eine Regelung der Drehlage des Verteilgestänges. Vorzugsweise ist eine Sensoreinrichtung vorgesehen und eingerichtet, die Drehlage des Verteilgestänges zu erfassen. Bevorzugt ist die Veränderungseinheit eingerichtet, die Veränderung der Drehlage anhand der erfassten Drehlage zu durchzuführen.

Vorzugsweise ist zumindest ein Stellglied vorgesehen, welches mit der Trägereinrichtung und dem Verteilgestänge gekoppelt ist, und wobei die Veränderungseinheit eingerichtet ist, das Stellglied zu beeinflussen, vorzugsweise anhand der erfassten Drehlage des Verteilgestänges.

Gemäß einer weiteren bevorzugten Ausführungsform kann es vorgesehen sein, dass die Dosiereinrichtung räumlich dem Verteilgestänge zugeordnet ist. Eine räumliche Zuordnung kann beispielsweise durch eine bauliche Einheit erreicht werden. Vorzugsweise kann es vorgesehen sein, dass die Dosiereinrichtung mit der Trägereinrichtung und/oder dem Gestängemittelteil gekoppelt ist.

Bevorzugt kann das Verteilgestänge zumindest zwei Ausleger aufweisen, welche jeweils mit dem Gestängemittelteil drehbar um eine aufrecht orientierte Drehachse gekoppelt sind.

Gemäß einer weiteren bevorzugten Ausführungsform kann es vorgesehen sein, dass einer der mehreren Gestängeabschnitte ein Gestängemittelteil ist.

Bevorzugt kann es vorgesehen sein, dass die zumindest zwei Gestängeabschnitte
- jeweils einen Ausleger des Verteilgestänges bilden und jeweils mittels einer ersten Drehachse relativ zu dem Gestängemittelteil drehbar gekoppelt sind; und/oder
- einen Ausleger des Verteilgestänges bilden und um die erste Drehachse drehbar miteinander verbunden sind.

Erfindungsgemäß wird die zugrunde liegende Aufgabe gelöst von einem Verfahren zum Betreiben eines pneumatischen Düngerstreuers, vorzugsweise eines pneumatischen Düngerstreuers nach zumindest einer beschriebenen Ausführungsform, umfassend die Verfahrensschritte:
- Bereitstellen eines pneumatischen Düngerstreuers, welcher zumindest ein Verteilgestänge mit mehreren Gestängeabschnitten und mehreren, unterschiedliche Längen aufweisende, Verteilleitungen aufweist,
- Drehen der zumindest zwei Gestängeabschnitte um eine erste, senkrecht zu einer Längserstreckung der Gestängeabschnitte orientierte, Drehachse anhand eines Steuerns und/oder Regelns von zumindest einer, mit den zumindest zwei Gestängeabschnitten gekoppelten, Stelleinrichtung anhand von erfassten Abständen des jeweiligen Gestängeabschnitts zu einer landwirtschaftlichen Fläche.

Im Kontext der Erfindung können die jeweiligen Schritte des Verfahrens in einer festgelegten Abfolge ausgeführt werden, wobei es optional jedoch auch denkbar ist, dass die Schritte des Verfahrens in einer beliebigen Abfolge durchgeführt werden können. Auch ein beliebiger Wechsel zwischen den Verfahrensschritten ist denkbar. Zudem ist auch eine Ergänzung des Verfahrens um weiteres Verfahrensschritte denkbar.

Bevorzugt werden die Schritte des Verfahrens kontinuierlich ausgeführt und/oder interwallweise ausgeführt.

Die Steuer- und/oder Regeleinheit weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Steuer- und/oder Regeleinheit, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer-und/oder Regelgröße herangezogen werden können.

Es sei noch darauf hingewiesen, dass die Begriffe "Steuern" und "Regeln" und "Steuereinrichtung" und "Regelungseinrichtung" und "Steuer- und/oder Regeleinheit, sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Hinsichtlich der Vorteile und Ausführungsformen des erfindungsgemäßen Verfahrens wird auf die Vorteile und Ausführungsformen des erfindungsgemäßen pneumatischen Düngerstreuers verwiesen.

Im Sinne der Anmeldung können Merkmale, die im Zusammenhang mit anderen Merkmalen offenbart sind, auch als für sich allein gestellt offenbart angesehen werden. Merkmale, die mittels "und/oder" miteinander verbunden sind, sind für sich alleine und in Kombination mit den weiteren Merkmalen als offenbart zu verstehen.

Zur Vermeidung von Wiederholungen sei darauf hingewiesen, dass die erfindungsgemäßen Ausführungsformen und Merkmale in beliebiger Weise und frei mit der Vorrichtung und/oder dem Verfahren kombinierbar sind. Dementsprechend sind alle Ausführungsformen und erfindungsgemäßen Merkmale sowohl für die Vorrichtung als auch für das Verfahren offenbart und beanspruchbar.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: einen pneumatischen Düngerstreuer gemäß einer Ausführungsform;
- Figur 2: den Düngerstreuer gemäß Figur 1 in einer Seitenansicht;
- Figur 3: einen Ausschnitt des Verteilgestänges;
- Figur 4: einen Ausschnitt der Figur 3;
- Figuren 5 und 6: Funktionsweise des Düngerstreuers.

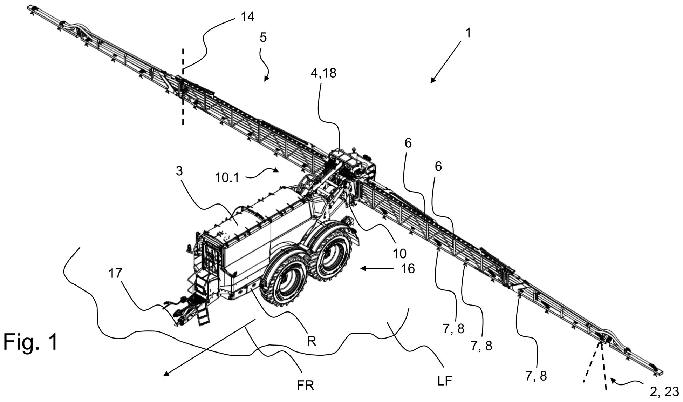

Die in den Figuren 1 bis 6 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Eine Ausführungsvariante eines pneumatischen Düngerstreuers 1 geht aus den Ansichten der Figuren hervor. Mittels des pneumatischen Düngersteuers 1 kann zweckmäßig insbesondere körnige, respektive granulare landwirtschaftliche Verteilgüter auf landwirtschaftlichen Flächen LF in gewünschten Mengen ausgebracht, das heißt verteilt werden können. Als Verteilgüter werden bspw. landwirtschaftliche Dünger und/oder Mikrogranulate und/oder Saatgüter und/oder dergl. verteilt.

Der Düngerstreuer 1 ist als eine mittels eines Zugfahrzeugs (z.B. hier nicht dargestellter Traktor) gezogener Düngerstreuer 1 ausgeführt, wobei der Düngerstreuer 1 jedoch auch als ein selbstfahrender oder als ein an einem Zugfahrzeug angebauter Düngerstreuer 1 ausgeführt sein kann. Der Düngerstreuer 1 könnte zudem ein autonomes Fahrzeug (z.B. vollautonom oder teilautonom) sein oder an ein autonomes Trägerfahrzeug angebaut sein.

Der Düngerstreuer 1 umfasst ein die Komponenten des Düngerstreuers 1 tragendes Rahmengestell R, sowie zum Mitführen und/oder Bereitstellen des Verteilguts zumindest einen Vorratsbehälter 3. Es können auch zwei oder mehr Vorratsbehälter 3 für zwei oder mehr, insbesondere unterschiedliche Verteilgüter vorgesehen sein, das heißt insbesondere am Rahmengestell R des Düngerstreuers 1 angebaut sein.

Zur Erreichung einer möglichst großen Schlagkraft, das heißt zur Erreichung einer großen Arbeitsbreite, weist der Düngerstreuer 1 ein sich quer zur Fahrtrichtung FR in großer Arbeitsbreite (z.B. 24 Meter, 30 Meter, 36 Meter oder mehr) erstreckendes Verteilgestänge 5 auf. Wobei das Verteilgestänge 5 einen mit dem Rahmengestell R verbundene Trägereinrichtung 10, ein Gestängemittelteil 11 und schwenkbar gegenüber dem Gestängemittelteil 11 am Gestängemittelteil 10 gelagerte Ausleger 13 aufweist. Bevorzugt weist jeder Ausleger zumindest einen Gestängeabschnitt 12 auf, welche drehbar um aufrecht orientierte Achsen zusammengesetzt sein können. Das Gestängemittelteil 1 kann auch als ein Gestängeabschnitt 12 bezeichnet sein.

Zur Einhaltung einer zulässigen Transportbreite (z.B. 3 Meter in Deutschland) sind die Ausleger 13 um aufrechte orientierte Achsen 14 schwenkbar am Gestängemittelteil 10 gelagert.

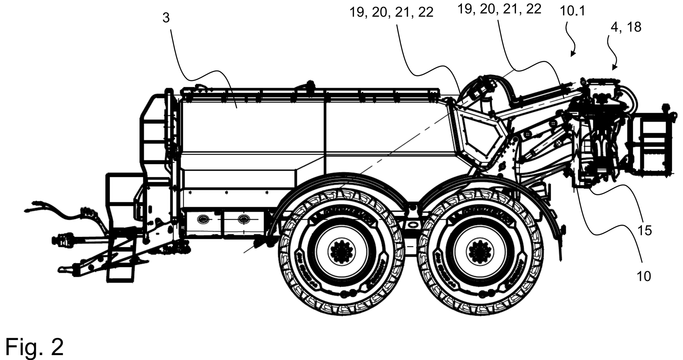

Das Verteilgestänge 5, insbesondere dessen Gestängemittelteil 11, ist mittels einer Lagerung 15, welche gemäß der Figur 2 andeutungsweise dargestellt ist, quer zur Fahrtrichtung FR drehbar um eine in Fahrtrichtung orientierte Drehachse gegenüber dem Rahmengestell R an der Trägereinrichtung 10 angebracht. Die Drehlage kann hierbei insbesondere mittels einer, mittels einer Steuereinrichtung ansteuerbaren, hier nicht dargestellten Stelleinrichtung steuerbar und/oder regelbar sein, wobei die Stelleinrichtung hierbei insbesondere zwischen dem Gestängemittelteil 11 und der Trägereinrichtung 10 und/oder zwischen dem Gestängemittelteil 11 und dem Rahmengestell R gelagert sein kann.

Das Rahmengestell R kann zudem vorzugsweise zweckmäßig insbesondere mehrteilig ausgeführt sein, wobei die Einzelteile wiederum mittels einer unlösbaren (z.B. Schweißen) und/oder lösbaren (z.B. Schrauben oder dergl. Maschinenelemente) Verbindung verbunden sein können.

Das Rahmengestell R umfasst darüber hinaus ein Laufräder aufweisendes Fahrwerk 16, welches gemäß der Ausführungsbeispiele insbesondere ein Tandemfahrwerk sein kann sowie zur Verbindung mit einem Zugfahrzeug eine Verbindungseinrichtung 17. Zudem ist der Vorratsbehälter 3 Bestandteil des Rahmengestells R.

Zur Einstellung der Höhenlage des Verteilgestänges 5 ist die Trägereinrichtung 10 mittels einer Höhenverstelleinrichtung 10.1, beispielsweise eines Parallelogramms höhenverstellbar am Rahmengestell R gelagert.

Dem Gestängemittelteil 11 des Verteilgestänges 5 ist eine Dosiereinrichtung 4 mit einem Dosierbehälter 18 zugeordnet, insbesondere bilden diese eine bauliche Einheit. In den Dosierbehälter 18 mündet ein Fördersystem 19, welche eine Förderleitung und/oder eine Fördereinrichtung 20 umfasst, es könnten jedoch auch mehrerer Förderleitungen und/oder Fördereinrichtungen 20 in den Dosierbehälter 18 münden um diesem somit ein, zwei oder mehr verschiedene Verteilgüter zuführen zu können.

Bevorzugt verjüngen sich sowohl der Vorratsbehälter 3 als auch der Dosierbehälter 18 nach unten hin trichterförmig, wobei jeweils an der tiefsten Stelle zumindest eine Auslassöffnung (hier nicht gezeigt) angeordnet ist.

Die Auslassöffnung ist durch eine Öffnung in dem jeweiligen Behälter 3, 18 gebildet, durch welche beispielsweise Verteilgut aus dem Vorratsbehälter 3 in das Fördersystem 19 und/oder aus dem Dosierbehälter 18 in die Dosiereinrichtung 4 weitergeleitet wird, wodurch die Auslassöffnung somit gleichzeitig den Einlass des Fördersystem 19 und/oder die Dosiereinrichtung 4 bildet.

Das Verteilgut von der Dosiereinrichtung 4 wird zu den am Verteilgestänge 5 angebrachten Verteilelementen 8 mittels Verteilleitungen 6 entlang des Verteilgestänges 5 gefördert. Das Verteilgut wird im Betrieb des Düngerstreuers 1 entlang der Verteilleitungen 6 mittels eines Luftvolumenstrom befördert, wobei hierfür die Verteilleitungen 6 mittels einer Strömungserzeugungseinrichtung (z.B. ein oder mehrere Gebläse wie bspw. Zentrifugalgebläse, Radialgebläse, Axialgebläse, Diagonalgebläse, Querstromgebläse oder dergl.) gekoppelt, das heißt wirkverbunden sind.

Entlang dem Verteilgestänge 5 ist eine Mehrzahl an Verteilleitungen 6 angebracht, an welchen gemäß der Ausführungsbeispiele jeweils ein Verteilelement 8 angebracht ist, es wären jedoch auch zwei oder mehr Verteilelemente 8 je Verteilleitung 6 denkbar oder möglich, wobei gemäß den Figuren jede Verteilleitung 6 ein Verteilelement 8 aufweist, welches dem jeweiligen äußeren Ende, welches eine Auslassöffnung 7 bildet, der Verteilleitung 6 zugeordnet ist. Die Verteilleitungen 6 weisen zudem, ausgehend von der Dosiereinrichtung 4 unterschiedliche Längen auf, das heißt das diese sich in unterschiedlichen Längen von der Dosiereinrichtung 4 entlang des Verteilgestänge 5 erstrecken.

Um ein kompakt bauende Verteilgestänge 5 zu erreichen, sind die Verteilleitungen 6 zudem übereinander angeordnet, das heißt, dass eine Vielzahl an Verteilleitungen 6 übereinander angeordnet sind.

Die Verteilleitungen 6 sind darüber hinaus in Bezug auf das Gestängemittelteil 11 im Wesentlichen symmetrisch zueinander am Verteilgestänge 5 angebracht. Zudem weisen die jeweils gegenüberliegenden Verteilelemente 8 jeweils eine zumindest weitgehend gleiche Höhenposition auf.

Die Verteilleitungen 6 weisen darüber hinaus, zwischen dem Gestängemittelteil 11 und den Auslegern 13 bzw. zwischen den Gestängeabschnitten 12 der Ausleger 13 jeweils, hier nicht dargestellte Trennstellen auf.

Die Verteilelemente 8 können insbesondere durch Prallteller gebildet sein, gegen welche Prallteller jeweils das Verteilgut mittels des Luftvolumenstrom gefördert und anschließend mittels des Pralltellers bspw. fächerförmig verteilt wird, je nachdem wie der Prallteller ausgebildet ist. Die Verteilelementen 8 können jedoch auch durch einen bogenförmigen Endbereich der Verteilleitungen 6 gebildet sein, welche bspw. somit wiederum als Prallteller wirken können.

Die Abstände der Verteilelemente 8 zueinander können insbesondere derartig sein, dass mittels den von den Verteilelementen 8 erzeugten Streufächer jeweils eine ganzflächige Verteilung von Verteilgut ermöglicht wird, insbesondere eine lückenlose Verteilteilung von Verteilgut ermöglicht wird.

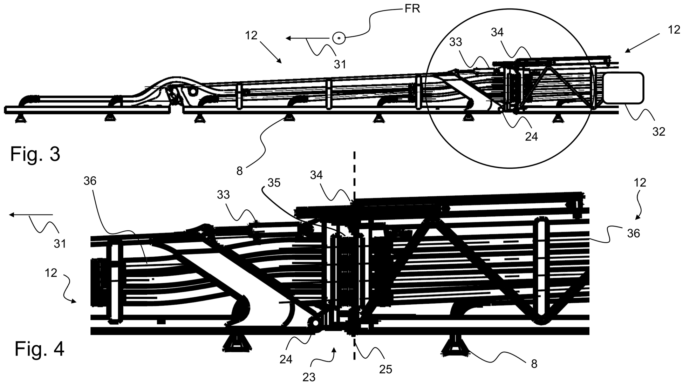

Gemäß einer alternativen Ausführungsvariante wäre es zudem denkbar, dass die Verteilelemente 8 derartig am Verteilgestänge 5 angeordnet sind oder dass die mittels der Verteilelemente 8 erzeugten Streufächer derartig sind, dass sich die Streufächer überlappen. So kann bspw. eine doppelte oder dreifache Überlappung der Streufächer vorgesehen sein, wodurch wiederum die Verteilqualität erhöht werden kann, wie in Figur 3 dargestellt ist.

Zur Versorgung der Dosiereinrichtung 4 mit dem jeweiligen Verteilgut ist diese mit dem zumindest einem Vorratsbehälter 3 wirkverbunden, wobei die Wirkverbindung mittels eines Fördersystem 19 mit bspw. einer Förderleitung 20 und mittels des Dosierbehälters 18 erfolgen kann.

Das Fördersystem 19 gemäß der Ausführungsbeispiele umfasst eine in den Dosierbehälter 18 mündende Förderleitung 20, respektive Fördereinrichtung 20, es könnten jedoch auch zwei oder mehr Förderleitungen 20, insbesondere für verschiedene Verteilgüter vorgesehen sein.

Das Fördersystem 19, respektive die Förderleitung 20 oder die Fördereinrichtung 20 ist zumindest zweigeteilt, das heißt, mehrere Förderabschnitte 21, 22 aufweist.

Das Fördersystem 19 und/oder die Förderabschnitte 21, 22 kann durch eine oder mehrere Förderschnecken und/oder Förderbänder und/oder dergl. gebildet sein.

Alternativ oder ergänzend kann das Fördersystem zudem, zumindest abschnittweise durch eine pneumatisches Fördersystem gebildet sein, bei welchem Verteilgut mittels eines Luftvolumenstrom entlang der Förderleitung 20 gefördert wird.

Die Dosiereinrichtung 4 ist dem Gestängemittelteil 11 und/oder der Trägereinrichtung 10 derartig zugeordnet, dass diese den Höhenbewegungen und/oder den Drehbewegungen des Verteilgestänge 5 zumindest weitgehend synchron folgen.

Bevorzugt ist es vorgesehen, dass der pneumatische Düngerstreuer 1 zumindest umfasst, ein Komponenten des Düngerstreuers 1 tragendes Rahmengestell R, einen Vorratsbehälter 3 zum Mitführen und Bereitstellen des Verteilguts (z.B. Saatgut, Dünger und/oder dergl.), ein sich quer zur Fahrtrichtung FR erstreckendes Verteilgestänge 5 , welches Verteilgestänge 5 eine Trägereinrichtung 10 , ein Gestängemittelteil 11 und drehbar am Gestängemittelteil 11 angebrachte Ausleger 13 aufweist, wobei am Verteilgestänge 5 Verteilleitungen 6 mit Verteilelementen 8 und ein mit dem Vorratsbehälter 3 mittels eines Fördersystems 19 wirkverbundener Dosierbehälter 18 angebracht sind, wobei zur Förderung des Verteilguts entlang der Verteilleitungen 6 zu den Verteilelementen 8 die Verteilleitungen 6 mit einem Luftvolumenstrom beaufschlagbar sind und wobei mittels zumindest einer, mit dem Verteilgestänge 5 eine baulich Einheit bildenden und mit dem Dosierbehälter 18 wirkverbundenen Dosiereinrichtung 4, Verteilgut in die Verteilleitungen 6 dosierbar ist.

Bevorzugt kann es vorgesehen sein, dass die Verteilleitungen 6 am Verteilgestänge 5 ein Verteilsystem oder zumindest zwei unabhängige Verteilsysteme zugehörig sind, das heißt, dass die unabhängigen Verteilsystem hinsichtlich der Verteilung unabhängig sind, jedoch auch gemeinsame Komponenten aufweisen können.

Erfindungsgemäß ist es vorgesehen, dass zumindest zwei Gestängeabschnitte 12 mittels zumindest eines Gelenks 23 drehbar um eine erste, senkrecht zu einer Längserstreckung 31 der Gestängeabschnitte 12 orientierte, Drehachse 24 miteinander verbunden sind.

Ein Ausschnitt des Verteilgestänges 5 mit zumindest zwei Gestängeabschnitten 12 ist der Figur 3 zu entnehmen. Eine Detailansicht der Figur 3 ist in der Figur 4 dargestellt.

Es ist zumindest eine Stelleinrichtung 33 vorgesehen, welche mit den zumindest zwei Gestängeabschnitten 12 gekoppelt ist. Die zumindest eine Stelleinrichtung 33 ist als ein Hydraulikzylinder ausgebildet. Die Stelleinrichtung 33 ist eingerichtet, die zumindest zwei Gestängeabschnitte 12 um die erste Drehachse 24 zueinander zu drehen. Ebenso ist eine Steuer- und/oder Regeleinheit 32 vorgesehen ist, welche eingerichtet ist, die zumindest eine Stelleinrichtung 33 zu steuern und/oder zu regeln, wodurch eine Drehung der Gestängeabschnitte 12 zueinander erreicht wird.

Weiter sind die zumindest zwei Gestängeabschnitte 12 zusätzlich mittels des zumindest einen Gelenks 23 drehbar um eine zweite, aufrecht orientierte Drehachse 25 drehbar miteinander verbunden. Das zumindest eine Gelenk 23 ist gemäß der Figuren 3 und 4 durch zwei Gelenke ausgebildet.

Darüber hinaus ist eine zweite Stelleinrichtung 34 vorgesehen, welche eingerichtet ist, die zwei Gestängeabschnitte 12 mittels des zumindest einen Gelenks 12 um die aufrecht orientierte Drehachse 25 zu drehen.

Zumindest einige der Verteilleitungen 6 erstrecken sich über die zwei Gestängeabschnitte 12 und umfassen zumindest zwei Verteilleitungsabschnitte 3, welche lösbar mittels einer lösbaren Verbindung 35 miteinander verbindbar sind. Die ist vorteilhaft, da die Verteilleitungen 6 zumindest teilweise starr ausgebildet sind und daher nicht ausreichend nachgiebig sind bei einem Drehen der Gestängeabschnitte 12 um die erste Drehachse 24 und/oder zweite Drehachse 25.

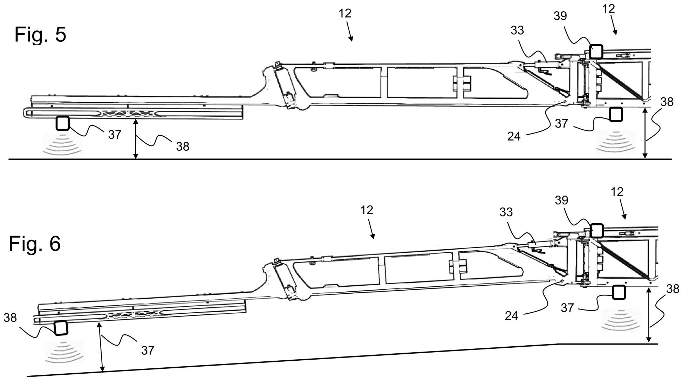

Anhand der Figuren 5 und 6 ist die Funktionsweise der Erfindung noch weiter erläutert.

Die Steuer- und/oder Regeleinheit 32 ist eingerichtet, die zumindest eine Stelleinrichtung 33 anhand von, mittels den zumindest zwei Gestängeabschnitten 12 zugeordneten Sensoreinheiten 37, erfassten Abständen 38 der zumindest zwei Gestängeabschnitte 12 zu der landwirtschaftlichen Fläche **LF** zu steuern und/oder zu regeln.

Ändert sich der Abstand 38 zu einem oder mehreren Gestängeabschnitten 12, so wird durch die Steuer- und/oder Regeleinheit 32 die zumindest eine Stelleinrichtung 33 entsprechend gesteuert und/oder geregelt, vorzugsweise derart, dass die Gestängeabschnitte 12 einen vorgegebenen Abstand 38 zu der landwirtschaftlichen Fläche LF aufweisen.

Eine Änderung des Abstands 38 kann Zustandekommen durch eine sich verändernde landwirtschaftliche Fläche LF, wie in der Figur 6 dargestellt. Ändert sich die Fläche LF wie dargestellt, so ändert sich auch der Abstand 38, so dass ein Steuern und/oder Regeln der Stelleinrichtung 33 notwendig ist, um einen vorgegebenen Abstand zu der Fläche LF aufweisen zu können.

Hierfür ist auch eine Lageerfassungseinrichtung 39 vorgesehen. Die Lageerfassungseinrichtung ist eingerichtet, eine Lage der zumindest zwei Gestängeabschnitte 12 zueinander zu erfassen, wobei die Steuer- und/oder Regeleinheit 32 eingerichtet ist, die zumindest eine Stelleinrichtung 33 anhand der erfassten Lage der zumindest zwei Gestängeabschnitte 12 zueinander zu steuern und/oder zu regeln.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

- 1: pneumatischer Düngerstreuer
- 2: Verteilgut
- 3: Vorratsbehälter
- 4: Dosiereinrichtung
- 5: Verteilgestänge
- 6: Verteilleitung
- 7: Auslassöffnung
- 8: Verteilelement
- 9: Strömungserzeugungseinrichtung
- 10: Trägereinrichtung
- 10.1: Höhenverstelleinrichtung
- 11: Gestängemittelteil
- 12: Gestängeabschnitt
- 13: Ausleger
- 14: aufrecht orientierte Achse
- 15: Lagerung
- 16: Fahrwerk
- 17: Verbindungseinrichtung
- 18: Dosierbehälter
- 19: Fördersystem
- 20: Förderleitung
- 21,22: Förderabschnitt
- 23: Gelenk
- 24: erste Drehachse
- 25: zweite Drehachse
- 31: Längserstreckung
- 32: Steuer- und/oder Regeleinheit
- 33: Stelleinrichtung
- 34: zweite Stelleinrichtung
- 35: lösbare Verbindung
- 36: Verteilleitungsabschnitt
- 37: Sensoreinheit
- 38: Abstand
- 39: Lageerfassungseinrichtung

## Patentansprüche

1. Pneumatischer Düngerstreuer (1) zum Ausbringen von körnigem Verteilgut auf eine landwirtschaftliche Fläche (LF), welcher zumindest ein Verteilgestänge (5) mit mehreren Gestängeabschnitten (12) und mehreren, unterschiedliche Längen aufweisende, Verteilleitungen (6) umfasst, wobei die Verteilleitungen (6) zur Förderung des Verteilguts mit einem, mittels einer Strömungserzeugungseinrichtung (9) erzeugtem, Luftvolumenstrom beaufschlagbar sind,
**dadurch gekennzeichnet, dass**
zumindest zwei der Gestängeabschnitte (12) mittels zumindest eines Gelenks (23) drehbar um eine erste, senkrecht zu einer Längserstreckung (31) der Gestängeabschnitte (12) orientierte, Drehachse (24) miteinander verbunden sind.

2. Pneumatischer Düngerstreuer (1) nach zumindest einem der vorangegangenen Ansprüche, **gekennzeichnet durch** eine Steuer- und/oder Regeleinheit (32), welche eingerichtet ist, eine mit den zumindest zwei Gestängeabschnitten (12) gekoppelte Stelleinrichtung (33) zu steuern und/oder zu regeln, wobei die zumindest eine Stelleinrichtung (33) eingerichtet ist, die zumindest zwei Gestängeabschnitte (12) mittels des zumindest einen Gelenks (23) um die erste, senkrecht zu einer Längserstreckung (31) der Gestängeabschnitte (12) orientierte, Drehachse (24) zu drehen.

3. Pneumatischer Düngerstreuer (1) nach zumindest Anspruch 2, **dadurch gekennzeichnet, dass** die Steuer- und/oder Regeleinheit (32) eingerichtet ist, die zumindest eine Stelleinrichtung (33) anhand von, mittels den zumindest zwei Gestängeabschnitten (12) zugeordneten Sensoreinheiten (37), erfassten Abständen der zumindest zwei Gestängeabschnitte (12) zu der landwirtschaftlichen Fläche (LF) zu steuern und/oder zu regeln.

4. Pneumatischer Düngerstreuer (1) nach zumindest einem der vorangegangenen Ansprüche 2 bis 3, **dadurch gekennzeichnet, dass** die Steuer- und/oder Regeleinheit (32) eingerichtet ist, die zumindest eine Stelleinrichtung (33) anhand der erfassten Abstände derart zu steuern und/oder zu regeln, dass zumindest einer der zumindest zwei Gestängeabschnitte (12) einen vorgebbaren Abstand zu der landwirtschaftlichen Fläche (LF) aufweist.

5. Pneumatischer Düngerstreuer (1) nach zumindest einem der Ansprüche 3 bis 4, **dadurch gekennzeichnet, dass** zumindest eine der jeweiligen Sensoreinheiten (37) eingerichtet ist, den Abstand des jeweiligen Gestängeabschnitts (12) zu der landwirtschaftlichen Fläche (LF) vorauseilend zu erfassen.

6. Pneumatischer Düngerstreuer (1) nach zumindest einem der Ansprüche 2 bis 5, **dadurch gekennzeichnet, dass** die jeweilige Sensoreinheit (37) eingerichtet ist, eine Bewegung, vorzugsweise eine Geschwindigkeit und/oder eine Beschleunigung, des jeweiligen Gestängeabschnitts (12) zu oder weg von der landwirtschaftlichen Fläche (LF) zu erfassen, wobei die Steuer- und/oder Regeleinheit (32) eingerichtet ist, zur Drehung der zumindest zwei Gestängeabschnitte (12) um die erste Drehachse (24) die zumindest eine Stelleinrichtung (23) anhand der erfassten Bewegung zu steuern und/oder zu regeln.

7. Pneumatischer Düngerstreuer (1) nach zumindest einem der vorangegangenen Ansprüche, **dadurch gekennzeichnet, dass** sich die Verteilleitungen (6) entlang der zumindest zwei Gestängeabschnitte (12) erstrecken, wobei sich zumindest ein Teil der Verteilleitungen (6) über die zumindest zwei Gestängeabschnitte (12) erstreckt und aus zumindest zwei mittels zumindest einer lösbaren Verbindung (35), vorzugsweise eine Steckverbindung, miteinander lösbar verbindbaren Verteilleitungsabschnitten (36) gebildet ist.

8. Pneumatischer Düngerstreuer (1) nach zumindest einem der vorangegangenen Ansprüche 2 bis 7, **dadurch gekennzeichnet, dass** die Steuer- und/oder Regeleinheit (32) eingerichtet ist, die zumindest eine Stelleinrichtung (33) anhand zumindest einer Drehbegrenzung zum Begrenzen der Drehung der zumindest zwei Gestängeabschnitte (12) um die erste Drehachse (24) zu steuern und/oder zu regeln.

9. Pneumatischer Düngerstreuer (1) nach zumindest Anspruch 8, **dadurch gekennzeichnet, dass** die zumindest eine Drehbegrenzung zum Begrenzen der Drehung der zumindest zwei Gestängeabschnitte (12) ist:
- eine Vorgabe eines maximalen Drehwinkels der zumindest zwei Gestängeabschnitte zueinander; und/oder
- eine Vorgabe eines maximalen Verfahrwegs der zumindest einen Stelleinrichtung (33); und/oder
- eine mechanische Begrenzung.

10. Pneumatischer Düngerstreuer (1) nach zumindest einem der vorangegangenen Ansprüche, **gekennzeichnet durch** zumindest eine Lageerfassungseinrichtung (39), welche eingerichtet ist, eine Lage der zumindest zwei Gestängeabschnitte (12) zueinander zu erfassen, wobei die Steuer- und/oder Regeleinheit (32) eingerichtet ist, die zumindest eine Stelleinrichtung (33) anhand der erfassten Lage der zumindest zwei Gestängeabschnitte (12) zueinander zu steuern und/oder zu regeln.

11. Pneumatischer Düngerstreuer (1) nach zumindest einem der vorangegangenen Ansprüche, **dadurch gekennzeichnet, dass** das Verteilgestänge (5) eine mit einem Rahmengestell (R) des Düngerstreuers (1) gekoppelte Trägereinrichtung (10) umfasst, wobei die Trägereinrichtung (10) mittels einer Höhenverstelleinheit gegenüber dem Rahmengestell (R) höhenverstellbar ist.

12. Pneumatischer Düngerstreuer (1) nach zumindest einem der vorangegangenen Ansprüche, **gekennzeichnet durch** eine Dosiereinrichtung (4), welche räumlich dem Verteilgestänge (5) zugeordnet ist, vorzugsweise die Dosiervorrichtung (4) mit dem Verteilgestänge (5) gekoppelt ist, wobei die Dosiereinrichtung (4) eingerichtet ist, Verteilgut in die Verteilleitungen (6) zu dosieren.

13. Pneumatischer Düngerstreuer (1) nach zumindest einem der vorangegangenen Ansprüche, **dadurch gekennzeichnet, dass** die zumindest zwei Gestängeabschnitte (12) mittels des zumindest einen Gelenks (23) drehbar um eine zweite, aufrecht orientierte, Drehachse (25) zueinander sind.

14. Pneumatischer Düngerstreuer (1) nach zumindest einem der vorangegangenen Ansprüche, **dadurch gekennzeichnet, dass** einer der mehreren Gestängeabschnitte (12) ein Gestängemittelteil (11) ist, wobei die zumindest zwei Gestängeabschnitte (12)
- jeweils einen Ausleger (13) des Verteilgestänges (5) bilden und jeweils mittels einer ersten Drehachse (24) relativ zu dem Gestängemittelteil (11) drehbar gekoppelt sind; und/oder
- einen Ausleger (13) des Verteilgestänges (5) bilden und um die erste Drehachse (24) drehbar miteinander verbunden sind.

15. Verfahren zum Betreiben eines pneumatischen Düngerstreuers (1), vorzugsweise eines pneumatischen Düngerstreuers (1) nach zumindest einem der vorangegangenen Ansprüche, **gekennzeichnet durch** die Verfahrensschritte:
- Bereitstellen eines pneumatischen Düngerstreuers (1), umfassend welcher zumindest ein Verteilgestänge (5) mit mehreren Gestängeabschnitten (12) und mehreren, unterschiedliche Längen aufweisende, Verteilleitungen (6) umfasst,
- Drehen der zumindest zwei Gestängeabschnitte (12) durch Steuern und/oder Regeln von zumindest einer, mit den zumindest zwei Gestängeabschnitten (12) gekoppelten, Stelleinrichtung (33) anhand von erfassten Abständen des jeweiligen Gestängeabschnitts (12) zu einer landwirtschaftlichen Fläche (LF).
